# EUROPEAN PATENT SPECIFICATION

(11) **EP 3 074 141 B1**
(45) Date of publication and mention of the grant of the patent: **16.11.2022**
(21) Application number: 14828268.4
(22) Date of filing: 19.11.2014
(51) Int. Cl.: B05B 5/00, B05B 5/03, B01D 53/26, B05B 7/16, B05B 7/24, B01D 63/02, B05B 7/22, C01B 21/04, B01D 53/22, B05B 5/10, B05B 7/08

(54) **AN AUTOMATIC APPARATUS FOR PNEUMATIC PAINTING**
AUTOMATISCHE VORRICHTUNG FÜR PNEUMATISCHES LACKIEREN
APPAREIL AUTOMATIQUE POUR LA PEINTURE PAR PULVERISATION PNEUMATIQUE

(30) Priority: 25.11.2013 IT FI20130286
(43) Date of publication of application: 05.10.2016
(73) Proprietor: Eurosider S.a.S. di Milli Ottavio & C., 58100 Grosseto (GR) (IT)
(72) Inventor: MILLI, Ottavio, I-58100 Grosseto (IT)
(74) Representative: Nesti, Antonio
(86) International application number: PCT/IB2014/002492
(87) International publication number: WO 2015/075530

(56) References cited:
- EP-A1- 3 003 569
- WO-A1-2009/056950
- WO-A2-2006/016256
- WO-A2-2014/095081
- US-A1- 2003 172 807
- US-A1- 2007 262 170
- US-A1- 2010 298 069

## Description

### Sector of the invention

The present invention relates to an apparatus and a method for air spray painting, of the type used in plants for industrial painting.

In particular, the apparatus finds application in automatic painting systems that make use of apparatuses for continuous production of a carrier fluid obtained starting from compressed ambient air.

### Prior art

It is known that in automatic painting systems, robotized arms are used that carry at the end an operating head for air spray painting that may be constituted by an air gun or by a rotary-bell device of the conventional or electrostatic type.

In the first case, the system sends to the gun a flow of carrier fluid, which is to atomize the paint, and a second flow of carrier fluid, which is to form the paint fan or shaping air.

In the case of rotary bells, the system sends to the painting head a central flow of paint, a first flow of fluid under pressure that serves for rotation of the bell, and a second, peripheral, flow of carrier fluid under pressure that is to atomize and entrain the paint, and thus form the paint cone or shaping air.

Currently, in automatic industrial systems for atomization of paint, normally used as thrust carrier fluid is compressed air at a pressure generally not lower than 3-6 bars

Apparatus are known, by example from US2010298069 and US20030349313 for applying coatings using as carrier fluid nitrogen-enriched air produced, for example, by passing air through hollow-fiber membranes. In this documents it is also shown that the temperature of the carrier fluid may be heated to optimize coating properties. From WO2009056950 it is described a spray painting device for spraying of a mixture of fluid and paint on a object to be painted, in which an emitter of ions is provided to invest a carrier fluid with an emission of ions in a ionization region arranged along the passage path of the fluid between the source of carrier fluid and an airbrush.

From WO2006016256 an apparatus for spray painting using as carrier fluid a flow of pre-heated fluid, in particular a flow of nitrogen-enriched air.

From US2003172807 it is known a spray-painting apparatus and method providing a treatment by separation membranes to a pre established and adjustable drying/separation degree of heated air to be as paint carrier fluid.

From US2007262170 it is known a spray painting apparatus provided with a rotary atomizer having shaping air nozzles through which an external shaping air stream is dispensed which forms the spray of a coating medium.

From WO2014195779 it is known a spray-painting apparatus providing means for sending a first entrainment flow of carrier fluid and a second flow of carrier fluid, separate from said first entrainment flow and capable of forming the spray fan.

However, robotized automatic painting systems of a known type do not prove satisfactory for control of the paint cone or fan (shaping air) and suffer from the phenomenon of overspray, i.e., the loss of paint that does not reach the substrate to be painted but is dispersed in the painting environment.

A further drawback is the relatively high pressure that must be used for compressing the carrier fluid and obtaining a sufficiently high speed of impact of the atomized paint on the substrate to be painted.

### Purpose of the invention

A first purpose of the present invention is hence an apparatus that will not present the aforesaid drawbacks of the known systems described, and will be able to increase the density of the shaping air in order to atomize the paint more effectively and at the same time reduce the pressure of the carrier fluid necessary for atomization.

### Summary of the invention

The above and further purposes are achieved by an apparatus according to claim 1 and by a method according to claim 12.

A first advantage of the invention lies in the fact that the density of the atomized paint is greater than that obtained with systems of a known type and enables a considerable improvement of the coating of the substrate in terms of covering power, painting speed, and grip of the layer of paint deposited on the substrate.

A further advantage is that the system enables increase of the efficiency of transfer of the paint on the articles to be painted and markedly reduces overspray as a result of the reduction of the pressure and the higher density.

A further advantage is that the system enables, as a result of the higher density of the carrier, approach of the bells to the articles to be painted in order to obtain a better uniformity of the thicknesses and reduce also in this case the overspray effect and reduce, in the case of electrostatic rotary bells, the electrostatic power.

A further advantage is to reduce the number of passes of application and obtain the same thicknesses with a single coat, markedly reducing the cycle times, for example in robotized systems for painting car bodies and components or other similar articles.

### List of the drawings

The above and further advantages will be better understood by any person skilled in the branch from the ensuing description and the annexed drawings, which are provided purely by way of non-limiting example and in which:
- Figure 1 is a schematic illustration of an apparatus according to the invention;
- Figure 2 shows a view from above of the apparatus of Figure 1;
- Figure 3 shows an automatic painting arm carrying an atomizer device, which is not part of the invention;
- Figure 4 shows an automatic painting arm carrying according to the invention; and
- Figure 5 shows an example of rotary-bell air painting device of a known type.

### Detailed description

With reference to the attached drawings an automatic air spray painting apparatus is described, of the type comprising a module 17 for producing a flow of carrier fluid under pressure, which is obtained starting from a supply 1 of compressed air and is to be delivered to at least one automatic painting device 2 equipped with a robotized arm 3 provided with an operating head 30 for air spray painting with an outlet 4 for paint, and at least one second outlet 5 for a pressurized flow of a fluid, set around said first outlet for formation of a paint cone or fan.

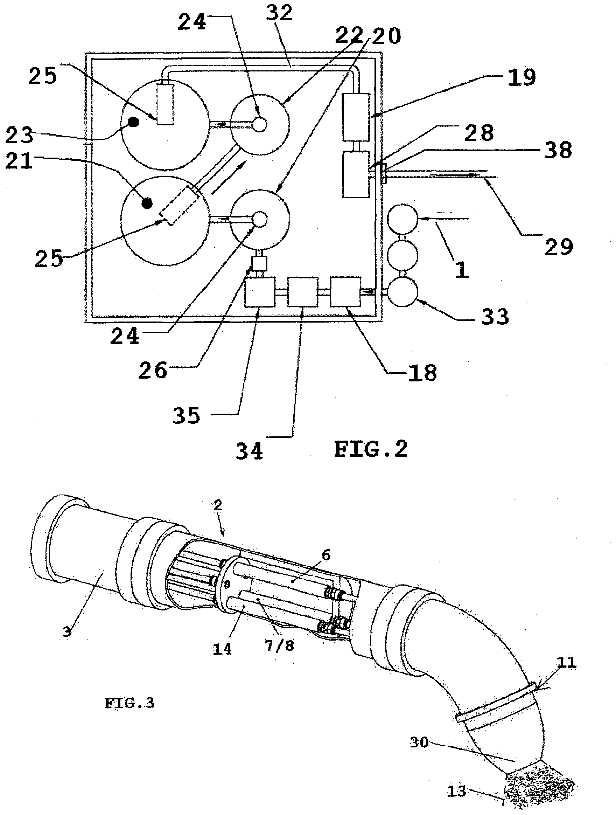

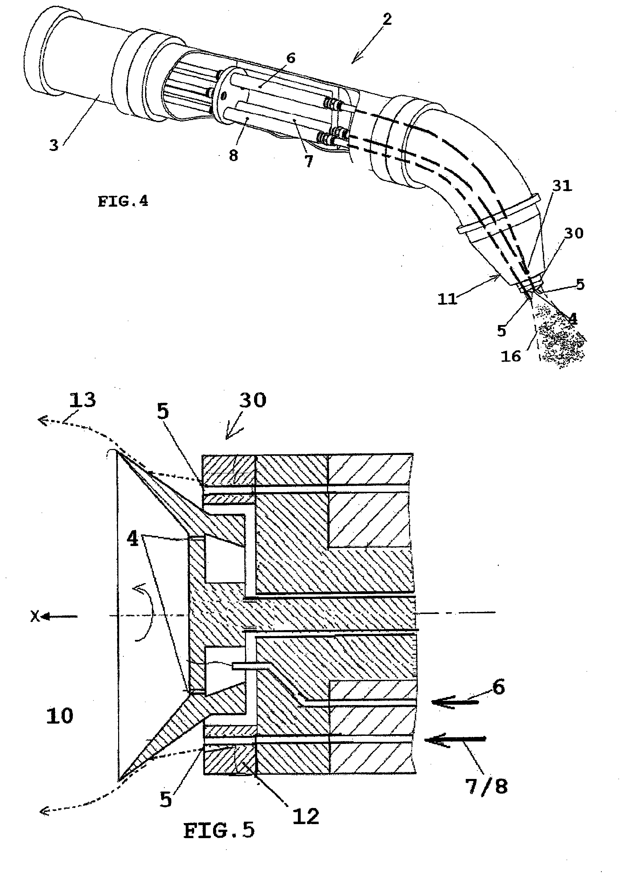

The device 2, represented schematically in Figures 3 and 4, further comprises a duct 6 for supply of a flow of paint from a paint source to the outlet 4 and a duct 7 for supply of a pressurized flow of carrier fluid that is to atomize said flow of paint. According to the invention, the duct 7 does not coincide with a further duct 8 for supply of a pressurized flow of carrier fluid to be delivered to the second outlets 5. According to the invention, the module 17 is a hollow-fibre separation module supplied by the source 1 of pressurized ambient air for continuous production of a flow of carrier fluid constituted by high-purity nitrogen, preferably at 98% to 99.9%, and comprises both means 19, 25, 26 for regulating the pressure of the nitrogen produced at a pressure comprised between 0.5 and 4 bar, preferably between 0.5 and 1.5 bar, and means 18, 9 for heat conditioning of the flow of nitrogen at a temperature that can be regulated between 8°C and 80°C, preferably between 8°C and 22°C.

According to a further advantageous characteristic of the invention, the apparatus moreover comprises an adjustable heated tube 29 for thermal stabilization of the flow of nitrogen leaving the separation module 17.

In operation, the module 17 is connected to a control unit 50 that manages automatic operation of the apparatus and in particular governs the movements and cycles of operation of the device 2 and enables setting of both the parameters for producing the carrier fluid (purity, temperature, pressure) and the painting parameters (speed, displacements, number of passes).

Advantageously, with this solution the density of the atomized paint is considerably increased, thanks to the higher specific weight of nitrogen, which can be sent to the duct 7 at a relatively low pressure and at a temperature adjusted on the basis of the ambient painting conditions and the type of substrate to be painted.

In a preferred embodiment, the apparatus comprises an ionization unit 28, in itself known, capable of ionizing the flow of nitrogen with charges of positive or negative sign, or in the neutral plasma state.

Illustrated in Figure 3 is a painting device in which the operating head is a rotary-bell device (of a type in itself known according to the representation of Figure 5) comprising a rotary bell 10 that turns thanks to a pneumatic motor driven by a flow of fluid under pressure that is supplied by a duct 14 and may coincide or not with the fluid used as carrier fluid.

The bell 10 is set at one end 11 of the arm 3 and is provided at the centre with the paint outlet 4 communicating with the paint-supply duct 6 for carrying out a centrifugal dispersion of the flow of paint towards the edges of the bell. The head 30 moreover comprises a ring 12 set upstream of the bell and provided with outlets 5 for nitrogen, which are directed towards the bell in the painting direction X and communicate with said duct 7 for supplying the flow of nitrogen for atomization, which in this case also performs the function of forming a paint cone 13. The embodiment in figure 3 is not part of the present invention.

Illustrated in Figure 4 is a painting device in which the above operating head is an air spray painting gun comprising a paint outlet 4, which is set at the end 11 of the arm 3 and communicates with the paint-supply duct 6 and the duct 7 for supplying the flow of nitrogen for atomization. In this case, the flow of paint and the flow of nitrogen for atomization converge, in a way in itself known and not described further, in a point 31 upstream of the outlet 4.

The head 30 moreover has at least two side nitrogen outlets 5, which communicate with the duct 8 for supplying the flow of nitrogen for formation of a paint fan 16.

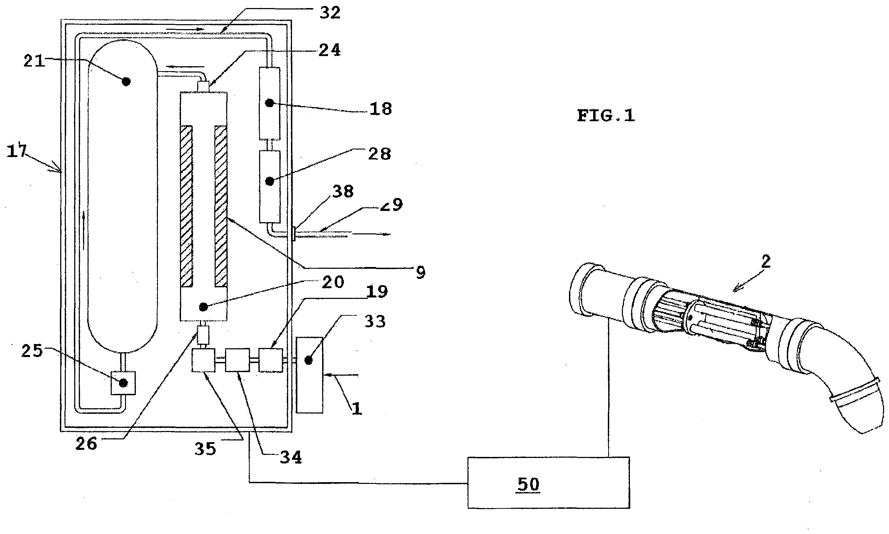

With reference to Figures 1 and 2, a preferred embodiment of a module 17 for producing the carrier fluid is described, which envisages a first hollow-fibre separation membrane 20, which is supplied by the compressed-air source 1 provided with filters 33 and communicates at outlet with a first reservoir 21 for storing nitrogen (or nitrogen-rich modified air), which in turn communicates at outlet with a second hollow-fibre separation membrane 22 that sends the high-purity nitrogen into a second reservoir 23 for storing pressurized nitrogen.

In the example described, the heat-conditioning means comprise a cooling and/or heating assembly 18, which receives the flow of nitrogen leaving the reservoir 23, preferably through a thermally insulated tube 32. and is able to stabilize the temperature of the flow of nitrogen at a value adjustable between 8°C and 80°C.

The heat-conditioning means may moreover comprise a heater 26 set at inlet to the first membrane 20, capable of heating the air to a temperature of between 10°C and 60°C, and an external heater 9 for heating at least the membrane 20, which is also active in a temperature range of between 10°C and 60°C.

Once again in the preferred example illustrated, the means for regulating the pressure are a pressure regulator 19 set downstream of the compressed-air source 1, a flow-regulator valve 24 set immediately downstream of one or both of the membranes 20, 22, and a back-pressure-regulating valve or back-pressure regulator (BPR) 25 set immediately downstream of one or both of the reservoirs 21, 23.

Preferably, the compressed air arriving from the source 1, before entering the membrane 20, traverses in succession the pressure regulator 26, a solenoid valve 34, a progressive actuator 35 for partialization of the flow, and the heater 26. Advantageously, with this solution sending of the compressed air into the membrane occurs also at start of operations in optimal conditions that can be regulated thanks to control of the pressure and of the temperature and to the progressive actuator 35, which prevents immediate introduction of the entire flow of compressed air into the membrane.

In some examples of application, it has been found that with the parameters appearing below excellent painting results are obtained.

### Example 1

Painting of plastic material in an environment at a temperature of 20°C
- purity 99.5%
- pressure 2 bar
- temperature 18°C
- positive ionization

### Example 2

### Metal substrate

- purity 99%
- pressure 1.8 bar
- temperature 18°C
- negative ionization.

The present invention has been described according to preferred embodiments, but equivalent variants may be conceived, without thereby departing from scope of the claims.

## Claims

1. An automatic air spray painting apparatus, comprising:
at least one painting device (2) equipped with a robotized arm (3) provided with a painting operating head (30), including:
a first outlet (4) for paint; and second outlets (5) for a pressurized flow of a fluid for the formation of a paint cone or fan;
a first duct (6) for supplying a flow of paint from a paint source to said first outlet (4) for paint;
a second duct (7) for supplying a pressurized flow of carrier fluid that is to atomize said flow of paint;
a third duct (8) for supplying a pressurized flow of carrier fluid to said at least said second outlets (5) for forming the paint cone or fan
a separation module (17), supplied by a source (1) of pressurized ambient air for the continuous production of a flow of carrier fluid constituted by high-purity (98%-99.9%) nitrogen directed to said second duct (7) for supplying a pressurized flow of carrier fluid that is to atomize said flow of paint;
means (19, 24, 25) for regulating the pressure of the flow of nitrogen for atomization; and adjustable heat conditioning means (18, 9, 26) for heat conditioning of the flow of nitrogen for atom ization
wherein said means (19, 24, 25) for regulating the pressure are provided for keeping the flow of nitrogen at a pressure comprised between 0.5 and 4 bar, preferably between 0.5 and 1.5 bar; and wherein
said heat-conditioning means (18, 9, 26) are provided for keeping the flow of nitrogen at a temperature adjustable between 8°C and 80°C, preferably between 8°C and 22°C,
**said apparatus being characterized in that** said third duct (8) for supplying a pressurized flow of carrier fluid to said second outlets (5) for forming the paint cone or fan is not coinciding with said second duct (7) for supplying a pressurized flow of carrier fluid that is to atomize said flow of paint, said separation module (17), being arranged to supply said flow of carrier fluid to said second outlets (5).

2. The apparatus according to any one of the preceding claims, wherein said operating head (30) is an air paint spray gun wherein: said first outlet (4) for paint is
a paint outlet (4) set at the end (11) of the arm (3), communicating with said first duct (6) for paint-supply and with said second duct (7) for supplying the flow of nitrogen for atomization; and wherein
said second outlets (5) are at least two second outlets (5) for the nitrogen communicating with said third duct (8) for supplying the flow of nitrogen, which are set alongside said first outlet (4) for formation of a paint fan (16).

3. The apparatus according to any one of the preceding claims, wherein said separation module (17 ) comprises at least one first hollow-fibre separation membrane (20), supplied by said compressed-air source (1) and communicating at outlet with a first reservoir (21) of nitrogen, which in turn communicates at outlet at least with said second duct (7) for supply of a flow of atomization carrier fluid.

4. The apparatus according to Claim 3, comprising a second hollow-fibre separation membrane (22) communicating at inlet with said first reservoir (21) and at outlet with a second reservoir (23) of pressurized nitrogen.

5. The apparatus according to Claim 3 or Claim 4, wherein said adjustable heat conditioning means (18, 9, 26) comprise an assembly (18) for cooling/heating the flow of nitrogen leaving the separation module (17).

6. The apparatus according to any one of Claims 3-5, wherein said means (16, 24, 25) for regulating the pressure comprise a pressure regulator (19) set downstream of the compressed-air source (1).

7. The apparatus according to any one of Claims 3-6, comprising a flow-regulator valve (24) immediately downstream at least of said first membrane (20) and a back-pressure-regulator (BPR) valve (25) immediately downstream at least of said first reservoir (21).

8. The apparatus according to any one of Claims 3-7, wherein said adjustable heat conditioning means (18,9, 26) comprise a heater (26) for heating the flow of air at inlet to said first membrane (20).

9. The apparatus according to any one of Claims 3-8, wherein said adjustable heat conditioning means (18,9, 26) comprise an external heater (9) for heating at least one membrane (20, 22).

10. The apparatus according to any one of the preceding claims, comprising an adjustable heated tube (29) for thermal stabilization of the flow of nitrogen leaving the separation module (17).

11. The apparatus according to any one of the preceding claims, comprising an assembly (28) for ionizing the flow of nitrogen leaving the separation module (17), which can be regulated for producing positive ions, negative ions, or plasma.

12. A method for air spray painting by means of an automatic air spray painting apparatus, comprising:
at least one painting device (2) equipped with a robotized arm (3) provided with a paint-spray operating head (30) including:
a first outlet (4) for paint; and second outlets (5) for a pressurized flow of a fluid for formation of a paint cone or fan;
a fist duct (6) for supply of a flow of paint from a paint source to first outlet (4) for paint;
a second duct (7) for supply of a pressurized flow of carrier fluid that is to atomize said flow of paint; and
a third duct (8) for supply of a pressurized flow of carrier fluid to said second outlets (5) for forming the paint cone or fan, supplying said second duct (7) with a flow of carrier fluid constituted by high-purity (98%-99.9%) nitrogen obtained continuously by means of a separation module (17) supplied by a source (1) of pressurized ambient air;
regulating the pressure of the flow of nitrogen for atomization at an adjustable pressure comprised between 0.5 and 4 bar, preferably between 0.5 and 1.5 bar;
thermally conditioning the flow of nitrogen for atomization at a temperature adjustable between 8°C and 80°C, preferably 8°C to 22°C;
**characterised in that**,
said third duct (8) for supplying a pressurized flow of carrier fluid to said second outlets (5) for forming the paint cone or fan is not coinciding with said second duct (7) for supplying a pressurized flow of carrier fluid that is to atomize said flow of paint; and
said separation module (17) supplying said third duct (8) for supply of a pressurized flow of carrier fluid to said second outlets (5) for forming the paint cone or fan.

## Patentansprüche

1. Automatische Luftsprühlackiervorrichtung, die Folgendes umfasst:
mindestens eine Lackiervorrichtung (2), die mit einem Roboterarm (3) ausgerüstet ist, der mit einem Lackier-Arbeitskopf (30) versehen ist, der enthält:
einen ersten Auslass (4) für Farbe; und
zweite Auslässe (5) für einen unter Druck stehenden Strom eines Fluids zur Bildung eines Farbkegels oder -fächers;
eine erste Zuleitung (6) zum Zuführen eines Farbstroms von einer Farbquelle zum ersten Farbauslass (4);
eine zweite Zuleitung (7) zum Zuführen eines unter Druck stehenden Stroms eines Trägerfluids, das den Farbstrom zerstäuben soll;
eine dritte Zuleitung (8) zum Zuführen eines unter Druck stehenden Stroms eines Trägerfluids zu den zweiten Auslässen (5), um den Farbkegel oder -fächer zu bilden;
ein Trennmodul (17), das von einer Quelle (1) von unter Druck stehender Umgebungsluft zur kontinuierlichen Erzeugung eines Stroms von Trägerfluid, das aus hochreinem (98%-99,9%) Stickstoff besteht, versorgt wird, der zur zweiten Zuleitung (7) zum Zuführen eines unter Druck stehenden Stroms eines Trägerfluids gerichtet ist, das den Farbstrom zerstäuben soll;
Mittel (19, 24, 25) zum Regulieren des Drucks des Stickstoffstroms zur Zerstäubung; und
einstellbare Wärmekonditionierungsmittel (18, 9, 26) zur Wärmekonditionierung des Stickstoffstroms zur Zerstäubung;
wobei die Mittel (19, 24, 25) zum Regulieren des Drucks dafür vorgesehen sind, den Stickstoffstrom bei einem Druck zu halten, der zwischen 0,5 und 4 bar, vorzugsweise zwischen 0,5 und 1,5 bar liegt; und wobei
die Wärmekonditionierungsmittel (18, 9, 26) dafür vorgesehen sind, den Stickstoffstrom bei einer Temperatur zu halten, die zwischen 8°C und 80°C, vorzugsweise zwischen 8°C und 22°C einstellbar ist,
**wobei die Vorrichtung dadurch gekennzeichnet ist, dass** die dritte Zuleitung (8) zum Zuführen eines unter Druck stehenden Stroms von Trägerfluid zu den zweiten Auslässen (5) zum Bilden des Farbkegels oder -fächers nicht mit der zweiten Zuleitung (7) zum Zuführen eines unter Druck stehenden Stroms von Trägerfluid zusammenfällt, der den Farbstrom zerstäuben soll, wobei das Trennmodul (17) angeordnet ist, den Strom von Trägerfluid den zweiten Auslässen (5) zuzuführen.

2. Vorrichtung nach einem der vorstehenden Ansprüche, wobei der Arbeitskopf (30) eine Druckluft-Farbspritzpistole ist, wobei: der erste Auslass (4) für Farbe ein Farbauslass (4) ist, der am Ende (11) des Arms (3) eingerichtet ist, der mit der ersten Zuleitung (6) zur Farbzuleitung und mit der zweiten Zuleitung (7) zum Zuführen des Stickstoffstroms zur Zerstäubung kommuniziert; und wobei die zweiten Auslässe (5) mindestens zwei zweite Auslässe (5) für den Stickstoff sind, die mit der dritten Zuleitung (8) zum Zuführen des Stickstoffstroms kommunizieren, die entlang des ersten Auslasses (4) zur Bildung eines Farbfächers eingerichtet sind.

3. Vorrichtung nach einem der vorstehenden Ansprüche, wobei das Trennmodul (17) mindestens eine erste Hohlfasertrennmembran (20) umfasst, die von der Druckluftquelle (1) versorgt wird und beim Auslass mit einem ersten Stickstoffreservoir (21) kommuniziert, das wiederum beim Auslass mit mindestens der zweiten Zuleitung (7) zum Zuführen eines Stroms von Atomisierungsträgerfluid kommuniziert.

4. Vorrichtung nach Anspruch 3, die eine zweite Hohlfasertrennmembran (22) umfasst, die beim Einlass mit dem ersten Reservoir (21) und beim Auslass mit einem zweiten Reservoir (23) von unter Druck stehendem Stickstoff kommuniziert.

5. Vorrichtung nach Anspruch 3 oder Anspruch 4, wobei die einstellbaren Wärmekonditionierungsmittel (18, 9, 26) eine Anordnung (18) zum Kühlen/Erhitzen des Stickstoffstroms umfassen, der aus dem Trennmodul (17) austritt.

6. Vorrichtung nach einem der Ansprüche 3-5, wobei die Mittel (16, 24, 25) zum Regulieren des Drucks einen Druckregler (19) umfassen, der stromabwärts der Druckluftquelle (1) eingerichtet ist.

7. Vorrichtung nach einem der Ansprüche 3-6, die ein Strömungsregelventil (24) unmittelbar stromabwärts mindestens der ersten Membran (20) und ein Gegendruckregelventil (BPR-Ventil) (25) unmittelbar stromabwärts mindestens des ersten Reservoirs (21) umfasst.

8. Vorrichtung nach einem der Ansprüche 3-7, wobei die einstellbaren Wärmekonditionierungsmittel (18, 9, 26) eine Heizeinrichtung (26) zum Erhitzen des Luftstroms am Einlass zu der ersten Membran (20) umfassen.

9. Vorrichtung nach einem der Ansprüche 3-8, wobei die einstellbaren Wärmekonditionierungsmittel (18, 9, 26) eine externe Heizeinrichtung (9) zum Erhitzen mindestens einer Membran (20, 22) umfassen.

10. Vorrichtung nach einem der vorstehenden Ansprüche, die ein einstellbares erhitztes Rohr (29) zur Wärmestabilisierung des Stickstoffstroms umfasst, der aus dem Trennmodul (17) austritt.

11. Vorrichtung nach einem der vorstehenden Ansprüche, die eine Anordnung (28) zum Ionisieren des Stickstoffstroms umfasst, der aus dem Trennmodul (17) austritt, die zum Erzeugen positiver Ionen, negativer Ionen oder Plasma reguliert werden kann.

12. Verfahren zum Luftsprühlackieren mit Hilfe einer automatischen Luftsprühlackiervorrichtung, umfassend:
mindestens eine Lackiervorrichtung (2), die mit einem Roboterarm (3) ausgerüstet ist, der mit einem Lackier-Arbeitskopf (30) versehen ist, der enthält:
einen ersten Auslass (4) für Farbe; und
zweite Auslässe (5) für einen unter Druck stehenden Strom eines Fluids zur Bildung eines Farbkegels oder -fächers;
eine erste Zuleitung (6) zum Zuführen eines Farbstroms von einer Farbquelle zum ersten Farbauslass (4);
eine zweite Zuleitung (7) zum Zuführen eines unter Druck stehenden Stroms eines Trägerfluids, das den Farbstrom zerstäuben soll; und
eine dritte Zuleitung (8) zum Zuführen eines unter Druck stehenden Stroms eines Trägerfluids zu den zweiten Auslässen (5), um den Farbkegel oder -fächer zu bilden;
Versorgen der zweiten Zuleitung (7) mit einem Strom von Trägerfluid, das aus hochreinem (98%-99,9%) Stickstoff besteht, das kontinuierlich mit Hilfe eines Trennmoduls (17) erhalten wird, das von einer Quelle (1) von unter Druck stehende Umgebungsluft versorgt wird;
Regulieren des Drucks des Stickstoffstroms zur Zerstäubung bei einem einstellbaren Druck, der zwischen 0,5 und 4 bar, vorzugsweise zwischen 0,5 und 1,5 bar liegt;
Wärmekonditionieren des Stickstoffstroms zur Zerstäubung bei einer Temperatur, die zwischen 8°C und 80°C, vorzugsweise zwischen 8°C und 22°C einstellbar ist;
**dadurch gekennzeichnet, dass**
die dritte Zuleitung (8) zum Zuführen eines unter Druck stehenden Stroms von Trägerfluid zu den zweiten Auslässen (5) zum Bilden des Farbkegels oder -fächers nicht mit der zweiten Zuleitung (7) zum Zuführen eines unter Druck stehenden Stroms von Trägerfluid zusammenfällt, der den Farbstrom zerstäuben soll; und
das Trennmodul (17) die dritte Zuleitung (8) versorgt, um den zweiten Auslässen (5) einen unter Druck stehenden Strom eines Trägerfluids zur Bildung eines Farbkegels oder -fächers zuzuführen.

## Revendications

1. Appareil automatique de peinture par pulvérisation pneumatique, comprenant :
au moins un dispositif de peinture (2) équipé d'un bras robotisé (3) muni d'une tête de commande de peinture (30), incluant :
une première sortie (4) pour la peinture ; et des secondes sorties (5) pour un flux pressurisé d'un fluide pour la formation d'un cône ou d'un éventail de peinture ;
un premier conduit (6) pour fournir un flux de peinture provenant d'une source de peinture à ladite première sortie (4) pour la peinture ;
un deuxième conduit (7) pour fournir un flux pressurisé de fluide porteur qui doit atomiser ledit flux de peinture ;
un troisième conduit (8) pour fournir un flux pressurisé de fluide porteur auxdites au moins dites secondes sorties (5) pour former le cône ou l'éventail de peinture ;
un module de séparation (17), alimenté par une source (1) d'air ambiant pressurisé pour la production continue d'un flux de fluide porteur constitué d'azote de haute pureté (98 % à 99,9 %) dirigé vers ledit deuxième conduit (7) pour fournir un flux pressurisé de fluide porteur qui doit atomiser ledit flux de peinture ;
des moyens (19, 24, 25) pour réguler la pression du flux d'azote pour l'atomisation ;
et
des moyens de conditionnement thermique réglables (18, 9, 26) pour le conditionnement thermique du flux d'azote pour l'atomisation ;
dans lequel lesdits moyens (19, 24, 25) de régulation de la pression sont prévus pour maintenir le flux d'azote à une pression comprise entre 0,5 et 4 bar, de préférence entre 0,5 et 1,5 bar ; et dans lequel
lesdits moyens de conditionnement thermique (18, 9, 26) sont prévus pour maintenir le flux d'azote à une température réglable entre 8 °C et 80 °C, de préférence entre 8 °C et 22 °C,
ledit appareil étant **caractérisé en ce que** ledit troisième conduit (8) pour fournir un flux pressurisé de fluide porteur auxdites secondes sorties (5) pour former le cône ou l'éventail de peinture n'est pas coïncident avec ledit deuxième conduit (7) pour fournir un flux pressurisé de fluide porteur qui doit atomiser ledit flux de peinture, ledit module de séparation (17) étant agencé pour fournir ledit flux de fluide porteur auxdites secondes sorties (5).

2. Appareil selon l'une quelconque des revendications précédentes, dans lequel ladite tête de commande (30) est un pistolet de pulvérisation pneumatique de peinture dans lequel : ladite première sortie (4) pour la peinture est une sortie de peinture (4) disposée à l'extrémité (11) du bras (3), communiquant avec ledit premier conduit (6) d'alimentation en peinture et avec ledit deuxième conduit (7) pour fournir le flux d'azote pour l'atomisation ; et dans lequel lesdites secondes sorties (5) sont au moins deux secondes sorties (5) pour l'azote communiquant avec ledit troisième conduit (8) pour fournir le flux d'azote, qui sont placées à côté de ladite première sortie (4) pour la formation d'un éventail de peinture (16).

3. Appareil selon l'une quelconque des revendications précédentes, dans lequel ledit module de séparation (17) comprend au moins une première membrane de séparation à fibres creuses (20), alimentée par ladite source d'air comprimé (1) et communiquant à la sortie avec un premier réservoir (21) d'azote, qui communique à son tour à la sortie au moins avec ledit deuxième conduit (7) pour fournir un flux de fluide porteur d'atomisation.

4. Appareil selon la revendication 3, comprenant une seconde membrane de séparation à fibres creuses (22) communiquant à l'entrée avec ledit premier réservoir (21) et à la sortie avec un second réservoir (23) d'azote pressurisé.

5. Appareil selon la revendication 3 ou la revendication 4, dans lequel lesdits moyens de conditionnement thermique réglables (18, 9, 26) comprennent un ensemble (18) de refroidissement/chauffage du flux d'azote sortant du module de séparation (17).

6. Appareil selon l'une quelconque des revendications 3 à 5, dans lequel lesdits moyens (16, 24, 25) de régulation de la pression comprennent un régulateur de pression (19) disposé en aval de la source d'air comprimé (1).

7. Appareil selon l'une quelconque des revendications 3 à 6, comprenant une vanne de régulation de débit (24) immédiatement en aval au moins de ladite première membrane (20) et une vanne de régulation de contre-pression (BPR) (25) immédiatement en aval au moins dudit premier réservoir (21).

8. Appareil selon l'une quelconque des revendications 3 à 7, dans lequel lesdits moyens de conditionnement thermique réglables (18, 9, 26) comprennent un dispositif de chauffage (26) pour chauffer le flux d'air à l'entrée de ladite première membrane (20).

9. Appareil selon l'une quelconque des revendications 3 à 8, dans lequel lesdits moyens de conditionnement thermique réglables (18, 9, 26) comprennent un dispositif de chauffage externe (9) pour chauffer au moins une membrane (20, 22).

10. Appareil selon l'une quelconque des revendications précédentes, comprenant un tube chauffé réglable (29) pour la stabilisation thermique du flux d'azote sortant du module de séparation (17).

11. Appareil selon l'une quelconque des revendications précédentes, comprenant un ensemble (28) d'ionisation du flux d'azote sortant du module de séparation (17), qui peut être régulé pour produire des ions positifs, des ions négatifs, ou du plasma.

12. Procédé de peinture par pulvérisation pneumatique au moyen d'un appareil automatique de peinture par pulvérisation pneumatique, comprenant :
au moins un dispositif de peinture (2) équipé d'un bras robotisé (3) muni d'une tête de commande de pulvérisation de peinture (30) incluant :
une première sortie (4) pour la peinture ; et des secondes sorties (5) pour un flux pressurisé d'un fluide pour la formation d'un cône ou d'un éventail de peinture ;
un premier conduit (6) pour fournir un flux de peinture provenant d'une source de peinture à une première sortie (4) pour la peinture ;
un deuxième conduit (7) pour fournir un flux pressurisé de fluide porteur qui doit atomiser ledit flux de peinture ; et
un troisième conduit (8) pour fournir un flux pressurisé de fluide porteur auxdites secondes sorties (5) pour former le cône ou l'éventail de peinture,
la fourniture audit deuxième conduit (7) d'un flux de fluide porteur constitué d'azote de haute pureté (98 % à 99,9 %) obtenu en continu au moyen d'un module de séparation (17) alimenté par une source (1) d'air ambiant pressurisé ;
la régulation de la pression du flux d'azote pour l'atomisation à une pression réglable comprise entre 0,5 et 4 bar, de préférence entre 0,5 et 1,5 bar ;
le conditionnement thermique du flux d'azote pour l'atomisation à une température réglable entre 8 °C et 80 °C, de préférence 8 °C et 22 °C ;
**caractérisé en ce que**
ledit troisième conduit (8) pour fournir un flux pressurisé de fluide porteur auxdites secondes sorties (5) pour former le cône ou l'éventail de peinture n'est pas coïncident avec ledit deuxième conduit (7) pour fournir un flux pressurisé de fluide porteur qui doit atomiser ledit flux de peinture ; et
ledit module de séparation (17) fournissant ledit troisième conduit (8) pour fournir un flux pressurisé de fluide porteur auxdites secondes sorties (5) pour former le cône ou l'éventail de peinture.
